# EUROPÄISCHE PATENTANMELDUNG

(11) **EP 4 512 693 A1**
(43) Veröffentlichungstag der Anmeldung: **26.02.2025**
(21) Anmeldenummer: 24195972.5
(22) Anmeldetag: 22.08.2024
(51) Int. Cl.: B62D 5/04, H02K 11/33

(54) **LENKSYSTEM MIT REDUNDANTEM STEUERUNGSSYSTEM, INSBESONDERE STEER-BY-WIRE LENKSYSTEM, SOWIE KRAFTFAHRZEUG MIT EINEM SOLCHEN LENKSYSTEM**

(30) Priorität: 25.08.2023 DE 102023208167
(71) Anmelder: VOLKSWAGEN AG, 38440 Wolfsburg (DE)
(72) Erfinder: Kempf, Tim, 38471 Rühen (DE); Stebner, Gerhard Edmound, 38259 Salzgitter (DE); Bauer, Fabian, 38162 Cremlingen (DE)

(57) **Zusammenfassung**

Die Erfindung betrifft ein Lenksystem mit redundantem Steuerungssystem (20), das eine erste Steuervorrichtung (22) und mindestens eine zweite Steuervorrichtung (24) aufweist, wobei die erste Steuervorrichtung (22) und die zweite Steuervorrichtung (24) derart miteinander verschaltet sind, dass diese sowohl gleichzeitig als auch separat eine funktional verbundene Lenkung ansteuern können, wobei die erste Steuervorrichtung (22) und die zweite Steuervorrichtung (24) auf voneinander abweichende durchschnittliche Lebensdauern (L1, L2) ausgelegt sind.

## Beschreibung

Die Erfindung betrifft ein Lenksystem nach dem Oberbegriff von Anspruch 1, insbesondere ein Steer-by-wire Lenksystem. Ferner betrifft die Erfindung ein Kraftfahrzeug mit einem solchen Lenksystem, insbesondere ein Kraftfahrzeug mit einem entsprechenden Steer-by-wire Lenksystem.

Steer-by-wire Lenksysteme, welche zukünftig im Automobilbereich in Großserie eingesetzt werden können, müssen eine deutlich höhere Ausfallsicherheit aufweisen als konventionelle Lenksysteme mit mechanischer Verbindung zwischen Lenkrad und lenkbaren Rädern. Dies liegt zum einen daran, dass Steer-by-wire Lenksysteme nicht über eine mechanische Verbindung zwischen Lenkrad und den lenkbaren Rädern eines Kraftfahrzeuges verfügen. Dementsprechend ist es dem Fahrer eines Fahrzeuges nicht mehr möglich, direkt vom Lenkrad auf die lenkbaren Räder zuzugreifen. Die Kopplung zwischen Lenkrad und den lenkbaren Rädern erfolgt rein elektronisch und führt bei einem Ausfall des Systems dazu, dass das Fahrzeug nicht mehr lenkbar ist. Ein vollständiger Ausfall des Lenksystems muss daher bei Steer-by-wire Lenksystemen verhindert werden. Fehler im Lenksystem müssen möglichst frühzeitig erkannt werden. Weiterhin erfordern autonom fahrende Assistenzsysteme eine erhöhte Sicherheit an die Fahrzeugkomponenten. In der Praxis werden daher zur Erzeugung der Ausfallsicherheit redundante Steuergeräte eingesetzt, d. h. ein erstes Steuergerät und ein zweites Steuergerät, die derart miteinander verschaltet sind, dass diese sowohl gleichzeitig als auch separat eine funktional verbundene Lenkung ansteuern können. Für die redundanten Funktionen muss ein gesichertes Ausfallverhalten über die geforderte Lebensdauer hinaus realisiert sein, um die Sicherheitsziele nach ISO 26262 ASIL D zu erreichen.

Problematisch sind Totalausfälle eines Lenksystems, insbesondere eines Steer-by-wire Lenksystems, mit redundantem Steuerungssystem, welche dadurch entstehen, dass die erste Steuervorrichtung und die zweite Steuervorrichtung eines redundanten Steuerungssystems gleichzeitig altersbedingt versagen. Damit sind Totalausfälle gemeint, welche zum Lebensdauerende hin stattfinden, nicht hingegen Ausfälle, welche durch fehlerhafte Produktion relativ früh in einem Lebenszyklus auftreten.

Aus CN 108715163 A und aus CN 108501944 A sind Sicherheits- und Stabilitätssysteme für Lenksysteme mit redundantem Steuerungssystem bekannt. Es ist bekannt, dass das Risiko für den Ausfall der einzelnen Steuerungssysteme zu Beginn eines Lebenszyklus und nach einer gewissen Lebensdauer erhöht ist. Besonders kritische Situationen können entstehen, wenn beide Steuerungssysteme eines Steer-by-wire Lenksystems mit redundantem Steuerungssystem gleichzeitig oder nahezu gleichzeitig ausfallen, so dass es zu einem unerwünschten Totalausfall des gesamten Lenksystems kommt.

Der Erfindung liegt die Aufgabe zugrunde, ein Lenksystem, insbesondere ein Steer-by-wire Lenksystem, mit redundantem Steuerungssystem dahingehend zu verbessern, dass mit möglichst geringem konstruktiven Aufwand die Wahrscheinlichkeit eines Totalausfalls des gesamten Lenksystems zum Lebensdauerende hin reduziert wird.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßes Lenksystem mit redundantem Steuerungssystem weist eine erste Steuervorrichtung und mindestens eine zweite Steuervorrichtung auf, wobei die erste Steuervorrichtung und die zweite Steuervorrichtung derart miteinander verschaltet sind, dass diese sowohl gleichzeitig als auch separat eine funktional verbundene Lenkung ansteuern können. Dabei sind die erste Steuervorrichtung und die zweite Steuervorrichtung auf voneinander abweichende durchschnittliche Lebensdauern ausgelegt. Aus dieser Auslegung resultiert eine hohe Wahrscheinlichkeit für eine tatsächlich voneinander abweichende Lebensdauer der ersten Steuervorrichtung und der zweiten Steuervorrichtung. Dabei gilt, dass mit zunehmender Abweichung der Auslegung der durchschnittlichen Lebensdauer der ersten Steuervorrichtung und der zweiten Steuervorrichtung auch die Wahrscheinlichkeit steigt, dass es nicht zu einem gleichzeitigen Totalausfall beider Steuervorrichtungen kommt. Dementsprechend ermöglicht es das erfindungsgemäße Lenksystem mit relativ geringem konstruktiven Aufwand, die Wahrscheinlichkeit eines Totalausfalls deutlich zu reduzieren.

Die Erfindung betrifft insbesondere Lenksysteme, bei welchen die erste Steuervorrichtung und die zweite Steuervorrichtung Teil eines Steer-by-wire Lenksystems sind. Diese Lenksysteme werden auch als Steer-by-wire Lenksysteme bezeichnet. Auf die in der Beschreibungseinleitung dazu bereits erläuterten technischen Details wird hiermit noch einmal verwiesen. Für derartige Steer-by-wire Lenksysteme hat die Erfindung besondere Vorteile, insbesondere weil in diesen Fällen eine reduzierte Ausfallwahrscheinlichkeit von besonderer Bedeutung ist, da bei einem Totalausfall des Lenksystems das Kraftfahrzeug überhaupt nicht mehr lenkbar ist.

In einer weiteren praktischen Ausführungsform eines erfindungsgemäßen Lenksystems sind die erste Steuervorrichtung und die zweite Steuervorrichtung baugleiche Elemente, wobei die Auslegung auf voneinander abweichende durchschnittliche Lebensdauern durch konstruktiv unterschiedliche Gestaltung oder unterschiedliche Auslegung mindestens eines Elements der Steuervorrichtung im Vergleich zur zweiten Steuervorrichtung realisiert ist. Mit der vorstehend genannten konstruktiv unterschiedlichen Gestaltung oder unterschiedlichen Auslegung mindestens eines Elements der Steuervorrichtung sind insbesondere unterschiedliche elektrische, thermische oder mechanische Belastungen der ersten Steuervorrichtung und der zweiten Steuervorrichtung im Betrieb gemeint. Dies führt dazu, dass die Steuervorrichtung mit geringerer Belastung eine erhöhte Lebensdauer aufweist, so dass die statistische Wahrscheinlichkeit für den Ausfall der anderen, höher belasteten Steuervorrichtung überwiegend wahrscheinlich ist. Vorzugsweise erfolgt die Auslegung derart, dass der Ausfall der höher belasteten Steuervorrichtung mit überwiegender Wahrscheinlichkeit stattfindet, bevor die Wahrscheinlichkeit des Ausfalls der anderen Steuervorrichtung erhöht ist. Wie die konstruktiv unterschiedliche Gestaltung oder unterschiedliche Auslegung mindestens eines Elements der Steuervorrichtung im Detail gestaltet sein kann, wird im Folgenden in Verbindung mit den weiteren Unteransprüchen erläutert.

Eine unterschiedliche Auslegung der ersten Steuervorrichtung im Vergleich zur zweiten Steuervorrichtung kann insbesondere durch eine asymmetrische Stromverteilung realisiert sein. Damit ist insbesondere eine erhöhte durchschnittliche und/oder maximale durch die Steuervorrichtung fließende Stromstärke gegenüber der korrespondierenden, durch die andere Steuervorrichtung fließende Stromstärke gemeint, insbesondere eine Erhöhung um mindestens 3 %. Ebenfalls verwiesen wird auf eine Erhöhung um mindestens 5 %, um mindestens 8 % oder um mindestens 10 %. Bevorzugt ist die Abweichung der Stromverteilung in einem Bereich zwischen 3 % und 30 % gewählt, bevorzugt zwischen 5 % und 25 % und weiter bevorzugt zwischen 5 % und 20 %. Durch Wahl eines der vorstehend genannten Bereiche kann die Wahrscheinlichkeit des Ausfalls des ersten Systems zum Lebensdauerende hin im Vergleich zu dem zweiten System weitestgehend entkoppelt werden, so dass ein Totalausfall durch gleichzeitigen Ausfall beider Steuervorrichtungen nahezu ausgeschlossen ist. Ein wichtiger Vorteil der asymmetrischen Stromverteilung liegt darin, dass praktisch kein konstruktiver Aufwand zur Realisierung dieser Ausführungsform erforderlich ist.

In einer weiteren praktischen Ausführungsform eines erfindungsgemäßen Lenksystems ist eine konstruktiv unterschiedliche Gestaltung durch mindestens teilweise, sich unterscheidende Verwendung von Wärmeleitpaste an korrespondierenden Bauteilen der ersten Steuervorrichtung und der zweiten Steuervorrichtung realisiert. Damit ist insbesondere die Verwendung von Wärmeleitpaste gemeint, deren Wärmeleitwert sich voneinander unterscheidet. Durch Auswahl einer Wärmeleitpaste mit höherem Wärmeleitwert kann die Wärmeabfuhr an den entsprechenden Bauteilen gegenüber der Wärmeabfuhr an dem korrespondierenden Bauteil der anderen Steuervorrichtung verbessert und die Lebensdauer dementsprechend erhöht werden. Auf die vorstehend bereits in Verbindung mit der asymmetrischen Stromverteilung erläuterten Vorteile wird hiermit noch einmal verwiesen. Bei Verwendung unterschiedlicher Wärmeleitpaste ist zu beachten, dass dazu Eingriffe in das Herstellungsverfahren eines erfindungsgemäßen Lenksystems erforderlich sind, insbesondere Eingriffe bei der Fertigung der Platinen der Steuervorrichtungen. Der Vollständigkeit halber wird noch darauf verwiesen, dass auch sich unterscheidende Verwendung von Wärmeleitpaste dadurch erfolgen kann, dass eine unterschiedliche Menge von Wärmeleitpaste aufgetragen wird, insbesondere damit die Menge der über die Wärmeleitpaste abschließenden Wärme, insbesondere von einem Element in Richtung eines Kühlkörpers, beeinflusst werden kann. Diese Ausführungsform hat den Vorteil, dass keine unterschiedlichen Wärmeleitpasten verwendet werden müssen, um zu einer konstruktiv unterschiedlichen Gestaltung zu gelangen.

In einer weiteren praktischen Ausführungsform eines erfindungsgemäßen Lenksystems ist eine konstruktiv unterschiedliche Gestaltung durch Ausbildung mindestens einer Lotstelle zwischen einem auf der Platine angeordneten Element und der Platine der ersten Steuervorrichtung realisiert, die einen anderen spezifischen Widerstand aufweist als die korrespondierende Lotstelle auf der Platine der zweiten Steuervorrichtung. Auf diese Art und Weise kann insbesondere durch Verwendung eines Lots mit einem geringeren spezifischen Widerstand die Erzeugung von Wärme reduziert werden und damit die thermische Belastung gesenkt, wodurch sich wiederum eine im Vergleich zu der anderen Steuerplatine mit einer Lotstelle mit höherem spezifischen Widerstand erhöhte Lebensdauer ergibt.

Die Erfindung betrifft insbesondere Lenksysteme, bei welchen die erste Steuervorrichtung und die zweite Steuervorrichtung jeweils aus mindestens einer Platine mit darauf aufgelöteten Elementen gebildet ist.

Dabei weist die erste Steuervorrichtung und die zweite Steuervorrichtung vorzugsweise jeweils mindestens eine Anordnung aus der Platine mit darauf aufgelöteten Elementen und einer Kühlplatte auf, wobei zwischen der Kühlplatte und mindestens einem Element als thermisches Kopplungselement eine Wärmeleitpaste angeordnet ist. Für die wie vorstehend beschrieben konstruktiv gestalteten Lenksysteme wurde die Erfindung im Speziellen gemacht.

Die Erfindung betrifft auch Kraftfahrzeuge mit einem wie vorstehend beschriebenen Lenksystem. Auf derartige Kraftfahrzeuge, insbesondere vierrädrige Personenkraftfahrzeuge und Lastkraftwagen wird hiermit explizit verwiesen.

Weitere praktische Ausführungsformen der Erfindung sind nachfolgend im Zusammenhang mit den Zeichnungen beschrieben. Es zeigen:
- Fig. 1: ein Kraftfahrzeug mit einem schematisch dargestellten Steer-by-wire Lenksystem in einer Seitenansicht,
- Fig. 2: eine erste Ausführungsform eines erfindungsgemäßen Lenksystems mit asymmetrischer Stromverteilung,
- Fig. 3: eine zweite Ausführungsform eines erfindungsgemäßen Lenksystems mit unterschiedlicher Wärmeleitpaste zwischen einem Element der Platine und einem Kühlkörper,
- Fig. 4: eine weitere Ausführungsform eines erfindungsgemäßen Lenksystems mit unterschiedlich ausgebildeten Lötstellen, mittels welchen ein Element auf der Platine fixiert ist sowie
- Fig. 5: ein Diagramm, das die Ausfallwahrscheinlichkeit über der Zeit für ein erfindungsgemäßes Lenksystem darstellt

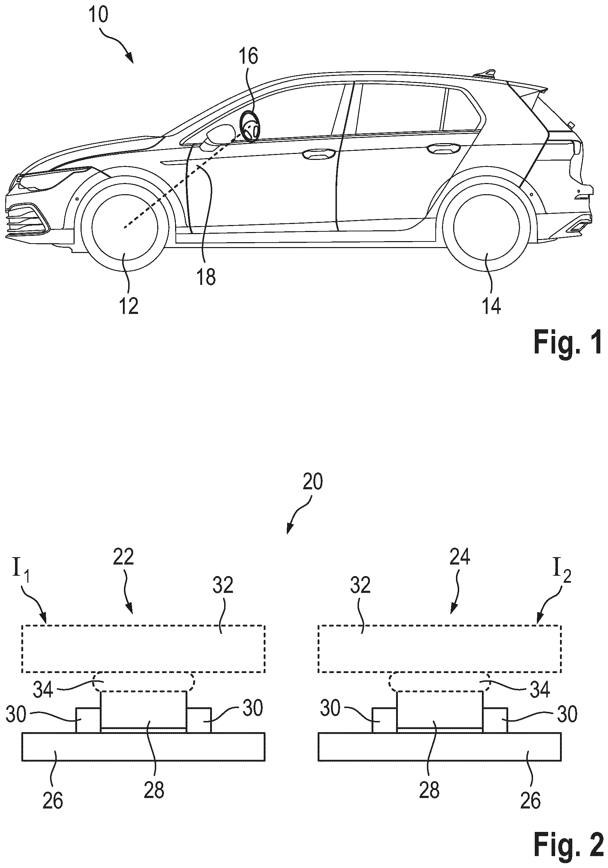

Figur 1 zeigt ein Kraftfahrzeug 10 mit lenkbaren Vorderrädern 12 und nicht lenkbaren Hinterrädern 14. Ein Lenkrad 16 ist über eine rein elektrische Verbindung, welche mittels einer gestrichelten Linie 18 dargestellt ist, mit den lenkbaren Vorderrädern 12 verbunden.

Figur 2 zeigt eine erste Ausführungsform eines erfindungsgemäßen Lenksystems mit einem redundanten Steuerungssystem 20. Das Steuerungssystem 20 weist eine erste Steuervorrichtung 22 und eine zweite Steuervorrichtung 24 auf. Von der ersten Steuervorrichtung 22 und der zweiten Steuervorrichtung 24 ist jeweils nur ein Ausschnitt dargestellt.

Die erste Steuervorrichtung 22 ist gebildet durch eine Platine 26 und auf der Platine 26 aufgelöteten Elementen 28, von welchen nur ein Element in Figur 2 dargestellt ist. Die Verbindung zwischen dem dargestellten Element 28 und der Platine 26 ist über Lot 30 hergestellt. Optional und daher gestrichelt dargestellt sind ein sich oberseitig des Elements 28 anschließender Kühlkörper 32 sowie zwischen dem Kühlkörper 32 und dem Element 28 angeordnete Wärmeleitpaste 34.

Die zweite Steuervorrichtung 24 ist baugleich ausgebildet, wobei für identische Elemente die gleichen Bezugszeichen wie bei der ersten Steuervorrichtung 22 verwendet werden. Bei der in Figur 2 gezeigten Ausführungsform sind tatsächlich alle einzelnen Komponenten baugleich, so dass sich keine konstruktiven Abweichungen zwischen der ersten Steuervorrichtung 22 und der zweiten Steuervorrichtung 24 ergeben.

Bei der in Figur 2 gezeigten Ausführungsform ist eine asymmetrische Stromverteilung insoweit vorgesehen, als die erste Steuervorrichtung 22 mit einem Strom I₁ durchflossen wird, wohingegen die zweite Steuervorrichtung 24 mit einem Strom I₂ durchflossen wird. Dabei ist der Strom I₁ kleiner als der Strom I₂, wodurch sich für die erste Steuervorrichtung 22 eine geringere thermische Belastung ergibt.

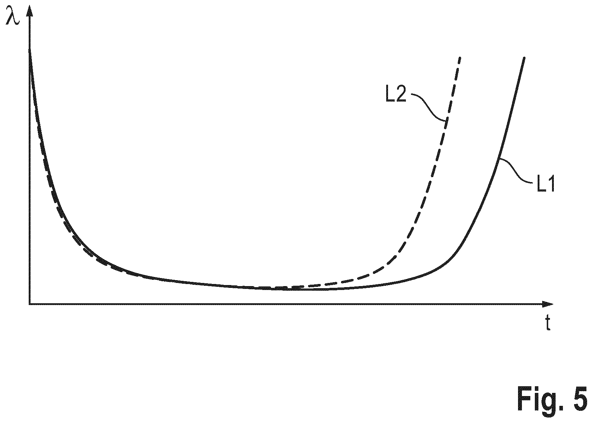

Im Ergebnis resultiert aus der geringeren thermischen Belastung der ersten Steuervorrichtung 22 eine erhöhte Lebensdauer, was in Figur 5 durch die durchgezogene Linie L1 realisiert ist. Die gestrichelten Linie L2 entspricht der Lebensdauer der zweiten Steuervorrichtung 24, welche durchschnittlich kürzer ist als die Lebensdauer L1 der ersten Steuervorrichtung 22. Dadurch ist die Wahrscheinlichkeit eines gleichzeitigen Ausfalls der ersten Steuervorrichtung 22 und der zweiten Steuervorrichtung 24 deutlich reduziert, da die höhere thermische Belastung aufgrund der Bestromung mit je zwei der zweiten Steuervorrichtung 24 zu einem mit an Sicherheit grenzender Wahrscheinlichkeit vorzeitigen Ausfall der zweiten Steuervorrichtung 24 führt.

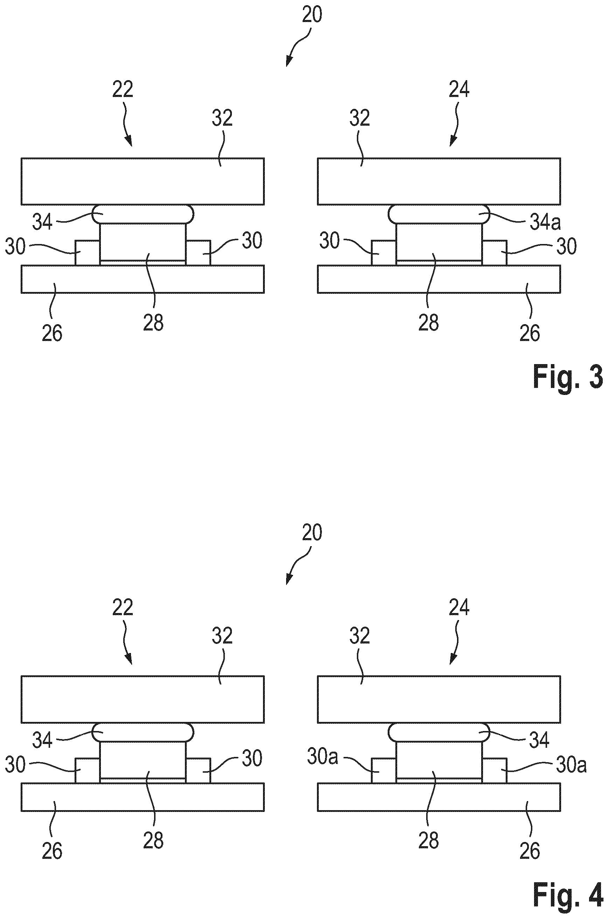

Figur 3 zeigt eine weitere Ausführungsform eines erfindungsgemäßen Lenksystems, wobei für identische Elemente wie in der in Figur 2 gezeigten Ausführungsform die gleichen Bezugszeichen wie in Figur 2 verwendet werden. Das Vorstehende gilt sinngemäß auch für die in Figur 4 dargestellte dritte Ausführungsform. Bei der in Figur 3 gezeigten zweiten Ausführungsform wurde bei der zweiten Steuervorrichtung 24 eine andere Wärmeleitpaste 34a verwendet, als bei der ersten Steuervorrichtung, bei welcher die gleiche Wärmeleitpaste 34 wie in Figur 2 zum Einsatz kommt. Dabei handelt es sich um eine konstruktiv unterschiedliche Gestaltung der ersten Steuervorrichtung 22 und der zweiten Steuervorrichtung 24. Dadurch kann ebenfalls eine wie in Figur 5 dargestellte Ausfallwahrscheinlichkeit über die Lebensdauer erzielt werden.

Figur 4 zeigt eine weitere Ausführungsform. Bei der in Figur 4 gezeigten Ausführungsform wurde für die Befestigung des Elements 28 sowie gegebenenfalls weiterer, nicht dargestellter Elemente (optional) ein anderes Lot 30a verwendet als bei der ersten Steuervorrichtung 22. Das Lot 30a, welches bei der zweiten Steuervorrichtung 24 verwendet wurde, weist einen höheren spezifischen Widerstand auf. Dementsprechend ist die thermische Belastung bei der ersten Steuervorrichtung 22 geringer als bei der zweiten Steuervorrichtung 24, wodurch sich wiederum eine längere Lebensdauer L1 für die erste Steuervorrichtung 22 ergibt als für die zweite Steuervorrichtung 24 (vgl. Figur 5)

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Kraftfahrzeug
- 12: lenkbares Vorderrad
- 14: lenkbares Hinterrad
- 16: Lenkrad
- 18: gestrichelte Linie
- 20: Steuerungssystem
- 22: erste Steuervorrichtung
- 24: zweite Steuervorrichtung
- 26: Platine
- 28: Element
- 30: Lot
- 32: Kühlkörper
- 34: Wärmeleitpaste

- I₁: Strom
- I₂: Strom
- L1: Lebensdauer (erste Steuervorrichtung)
- L2: Lebensdauer (zweite Steuervorrichtung)

## Patentansprüche

1. Lenksystem mit redundantem Steuerungssystem (20), das eine erste Steuervorrichtung (22) und mindestens eine zweite Steuervorrichtung (24) aufweist, wobei die erste Steuervorrichtung (22) und die zweite Steuervorrichtung (24) derart miteinander verschaltet sind, dass diese sowohl gleichzeitig als auch separat eine funktional verbundene Lenkung ansteuern können,
**dadurch gekennzeichnet,**
**dass** die erste Steuervorrichtung (22) und die zweite Steuervorrichtung (24) auf voneinander abweichende durchschnittliche Lebensdauern (L1, L2) ausgelegt sind.

2. Lenksystem nach dem vorstehenden Anspruch, **dadurch gekennzeichnet, dass** die erste Steuervorrichtung (22) und die zweite Steuervorrichtung (24) Teil eines Steer-by-wire Lenksystems sind.

3. Lenksystem nach einem der vorstehenden Ansprüche, **dadurch gekennzeichnet, dass** die erste Steuervorrichtung (22) und die zweite Steuervorrichtung (24) baugleiche Elemente sind, wobei die Auslegung auf voneinander abweichende durchschnittliche Lebensdauern (L1, L2) durch konstruktiv unterschiedliche Gestaltung oder unterschiedliche Auslegung mindestens eines Elements der ersten Steuervorrichtung (22) im Vergleich zur zweiten Steuervorrichtung (24) realisiert ist.

4. Lenksystem nach Anspruch 3, **dadurch gekennzeichnet, dass** eine unterschiedliche Auslegung der ersten Steuervorrichtung (22) im Vergleich zur zweiten Steuervorrichtung (24) durch eine asymmetrische Stromverteilung realisiert ist.

5. Lenksystem nach einem der Ansprüche 3 oder 4, **dadurch gekennzeichnet, dass** eine konstruktiv unterschiedliche Gestaltung durch mindestens teilweise, sich unterscheidende Verwendung von Wärmeleitpaste (34) an korrespondierenden Bauteilen der ersten Steuervorrichtung (22) und der zweiten Steuervorrichtung (24) realisiert ist.

6. Lenksystem nach dem vorstehenden Anspruch, **dadurch gekennzeichnet, dass** an mindestens einem Element der ersten Steuervorrichtung (22) eine Wärmeleitpaste (34) mit einem anderen Wärmeleitwert angeordnet ist als an dem korrespondierenden Element der zweiten Steuervorrichtung (24).

7. Lenksystem nach einem der Ansprüche 3 bis 6, **dadurch gekennzeichnet, dass** eine konstruktiv unterschiedliche Gestaltung durch Ausbildung mindestens einer Lotstelle zwischen einem auf der Platine (26) angeordneten Element (28) und der Platine (26) der ersten Steuervorrichtung (22) realisiert ist, die einen anderen spezifischen Widerstand aufweist als die korrespondierende Lotstelle auf der Platine (26) der zweiten Steuervorrichtung (24).

8. Lenksystem nach einem der vorstehenden Ansprüche, **dadurch gekennzeichnet, dass** die erste Steuervorrichtung (22) und die zweite Steuervorrichtung (24) jeweils aus mindestens einer Platine (26) mit darauf aufgelöteten Elementen (28) gebildet ist.

9. Lenksystem nach dem vorstehenden Anspruch, **dadurch gekennzeichnet, dass** die erste Steuervorrichtung (22) und die zweite Steuervorrichtung (24) jeweils mindestens eine Anordnung aus der Platine (26) mit darauf aufgelöteten Elementen (28) und einer Kühlplatte (32) aufweist, wobei zwischen der Kühlplatte (32) und mindestens einem Element (28) als thermisches Kopplungselement eine Wärmeleitpaste (34) angeordnet ist.

10. Kraftfahrzeug mit einem Lenksystem nach einem der vorstehenden Ansprüche.
